# EUROPEAN PATENT APPLICATION

(11) **EP 4 306 013 A1**
(43) Date of publication of application: **17.01.2024**
(21) Application number: 22185269.2
(22) Date of filing: 15.07.2022
(51) Int. Cl.: A47J 31/60, B65D 85/804, B65D 65/46

(54) **CLEANSING CAPSULE FOR AN EXTRACTION APPLIANCE**

(71) Applicant: B&T Entwicklungs- und Vermarktungsgesellschaft mbH, 22297 Hamburg (DE)
(72) Inventor: WICHE, Marius-Konstantin, 22763 Hamburg (DE)
(74) Representative: Frei Patent Attorneys

(57) **Abstract**

According to an aspect of the present invention, a cleansing capsule (1) is provided, the capsule comprising a cleansing and/or descaling agent, and the cleansing capsule comprising a capsule wall of a water-soluble polymer. The cleansing and/or descaling agent may be enclosed by the capsule wall (2, 3), and/or it may be contained in the capsule wall, for example by being dissolved in the water-soluble polymer material of the capsule wall and/or it by being dispersed (for example as small particles) in the water-soluble polymer material.

## Description

The present invention relates to a cleansing capsule.

Cleansing capsules containing a cleansing and/or descaling agent are well-known for use in a beverage preparation machine for portion capsules. Such beverage preparation machines are in use for preparing a brewed product from an extraction material contained in a beverage preparation capsule (portion capsule). They usually have an injector for introducing a brewing liquid, usually hot water, into the portion capsule and a discharge device for discharging an extraction product from the portion capsule. In this, the injector and the discharge device together define a brewing chamber into which the portion capsule can be inserted. The injector has at least one injection-side piercing device, and the discharge device may have at least one extraction side piercing device or other structure that ruptures the capsule wall on the discharge side. Beverage preparation machines of this type are used in particular for the preparation of coffee, but also of tea.

Cleansing capsules are used for removing residues remaining in the brewing chamber after a certain number of brewing processes, which residues if not removed may end up in the brewed beverage. For a cleaning process, one such cleansing capsule is placed in the brewing chamber, and hot water is injected in it to dissolve a cleansing agent contained in it. The hot water containing the cleansing agent in particular also dissolves fat-soluble residues, in contrast to a mere rinsing process.

As an alternative to using a cleansing capsule, the brewing chamber could also be cleaned using a cleansing solution supplied to the water tank of the extraction appliance. The cleansing capsule, compared to this alternative, has the advantage that the cleansing agent is applied in a targeted manner only where it is necessary, whereas when a cleansing solution in the water tank is used, a large portion of the cleansing solution is wasted. On the downside, however, a cleansing capsule is usually of plastic material and/or aluminum and has to be disposed of after use. Thus, both possibilities have their disadvantages in terms of environmental impact.

It is therefore an object of the present invention to provide an approach overcoming disadvantages of the prior art, especially in terms of environmental impact.

According to an aspect of the present invention, a cleansing capsule is provided, the cleansing capsule comprising a cleansing and/or descaling agent, and the cleansing capsule comprising a capsule wall comprising a water-soluble polymer.

By the cleansing capsule comprising a water-soluble polymer, the advantages of cleansing capsules (namely the targeted application of the cleansing agent where it is needed, in contrast to liquid cleansing agents supplied to the water tank) are maintained, while the problem of plastic waste is solved or at least diminished.

Especially, the capsule wall may consist of a water-soluble polymer, possibly with other soluble ingredients, whereby the capsule as a whole is water-soluble so that after the cleaning process, there are no solid residuals from the cleansing capsule (no waste material). In such embodiments, no plastic waste at all results after the cleansing process.

Especially, the cleansing capsule may be capable of being completely dissolved within a characteristic time of the cleansing process, for example within not more than 15 min, not more than 10 min or even not more than 6 min, for example within 5-6 min.

According to a first option, the cleansing and/or descaling agent is enclosed by the capsule wall - i.e., it is contained in the capsule in the same way as the extraction material (or extract or similar) is contained in a beverage preparation capsule. It constitutes a filling of the capsule

According to a second option, the cleansing and/or descaling agent is contained in the capsule wall. It may for example be dissolved in the water-soluble polymer material of the capsule wall and/or it may be dispersed (for example as small particles) in the water-soluble polymer material. In addition or an alternative, it may be arranged in an inner layer that is exposed when the water-soluble polymer material is dissolved.

The first and second options may be combined. For example, a first cleansing and/or descaling agent may be enclosed by the capsule wall (similar to conventional cleansing capsules) and in addition a second cleansing and/or descaling agent may be contained in the capsule wall, for example by being dissolved and/or dispersed in the water-soluble polymer material of the capsule wall. In this, the first and second cleansing and/or descaling agents may be different or may be the same.

As is known in the art, the cleansing agent may consist of a composition with different constituents. It is well possible that the different constituents are provided in different forms and/or different portions of the capsule - for example a component being a salt may be dissolved in the polymer while a non-soluble component may be dispersed in the polymer in the form of small particles and/or may be provided as a filling of the capsule, etc. Different combinations are possible.

A polymer in the context of the present text is deemed to be water-soluble if it dissolves in water at any temperature at which water is liquid at atmospheric pressure. In embodiments, the water-soluble polymer is water-soluble at least at elevated temperature of for example 60°C or more (hot-water-soluble). In embodiments, the polymer may be water-soluble also at room temperature.

The water-soluble polymer may be bio-degradable.

In the present text, "bio-degradable" may mean biologically degradable according to the European standard EN 13432 (as of the end of 2021). In addition or as an alternative, it may mean biologically degradable according to the European standard EN 14995 (as of the end of 2021). Thus "bio-degradable" especially refers to "biologically degradable according to EN 13432 and/or according to EN 14995.

The water soluble polymer may in addition or as an alternative be degradable in sewage treatment plants (aerobic biodegradability) in accordance with DIN EN ISO 9888 (as of the end of 2021); determined in accordance with the so-called Zahn-Wellens test.

In embodiments, the capsule wall comprises a salt dissolved in the polymer in addition to comprising a water-soluble polymer. In embodiments with the cleansing agent dissolved in the polymer material of the capsule wall, the salt may belong to, or constitute, the cleansing agent.

Polymer compositions with salt are for example known from WO 2014/155059. They feature the important advantage of having a high melt flow index to make them well mouldable. This is advantageous for bio-degradable cleansing capsules. Thus, the approach according to embodiments yields the substantial advantage that the salt comprised in the cleansing agent adds to the melt flow properties of the polymer material from which the capsule wall is made.

In particular, the water-soluble polymer may comprise at least one of poly(vinyl alcohol) (PVOH), cellulose-ether polymer, Butenediol-Vinyl-Alcohol-Copolymer (BVOH), Polyvinyl butyral (PVB) and Ethylene-Vinyl-Alcohol-Copolymers (EVOH).

The polymer in particular may be a water-soluble polymer that is a vinyl alcohol polymer or -copolymer or a mixture or blend of two or more vinyl-alcohol copolymers. I.e., the water-soluble polymer of may be a polymer that has a plurality of vinyl alcohol [CH2CH(OH)] groups in the polymer chain. These polymers include the mentioned PVOH, BVOH, and EVOH as well as others.

If the water-soluble polymer comprises or a mixture or blend of two or more vinyl-alcohol copolymers, the copolymers can differ in molar mass, molecular architecture, e. g. branching, comonomer type and amount, or other variation parameters.

The polymer may thus be a vinyl alcohol comprising, especially a vinyl alcohol rich, copolymer or a vinyl alcohol homopolymer. The polymer can in embodiments comprise >75%, in particular >90%, monomer units carrying an OH unit.

The water-soluble polymer can comprise further polar comonomers. Examples include maleic acid and maleic acid anhydride, fumaric acid and itaconic acid.

The water-soluble polymer, in particular the polyvinyl alcohol (PVOH), can have a degree of hydrolysis of 70% to 99,9%.

The polymer composition to which the water-soluble polymer belongs, and which constitutes the capsule wall or a layer thereof, may further include a plasticizer (liquid or solid) to lower the melt temperature, which is especially beneficial for molding. The plasticizer can in embodiments be hygroscopic. The plasticizer may be selected from the group consisting of polyols (oligo- and polyhydroxy compounds) and low molecular weight amides, especially of trioles, diols, poly-triols, poly-diols, for example glycerine, ethylene glycol, propylene glycol, triethylene glycol, low molecular weight polyethylene glycols; and low molecular weight amides. In embodiments, the plasticizer may be selected from the group consisting of dipropylene glycol, higher oligomers of ethylene glycol or propylene glycol, butylene glycol, glycerol, pentaerythritol, sorbitol, 1,4-Monoanhydrohexitols, 1,4-3,6-dianhydrohexitols as well as esters of the same. Preferred plasticizers are glycerine, and polypropylene glycol.

The plasticizer may be present in an amount of between 2% and 25%, especially between 5% and 18%.

It is not excluded that the polymer composition in addition to comprising the water-soluble polymer, the salt, the cleansing agent (if dissolved in the polymer) and optionally a plasticizer, comprise further constituents, such as a thermal stabilizer (for example a metallic stearate, such as sodium stearate), for example in a concentration of at most 1%, especially at most 0.5%, and/or a an inorganic filler and/or an organic filler, such as cellulose and/or other constituents that influence the properties of the composition, or of ingredients thereof.

Further examples of suitable polymer compositions may for example be found in the mentioned publication WO 2014/155059.

The cleansing agent may be any substance or mixture of substances suitable for cleansing the brewing chamber.

In embodiments, it may contain:
- an oxygen-based bleaching agent (for example between 15% and 30% (percentages are weight-% in this text); for example sodium percarbonate;
- at least one phosphate (for example between 1% and 15%);
- at least one carbonate (for example between 5 and 15%, for example sodium carbonate;
- non-ionic tensides (for example at most 1%)
- at least one complexing agent (for example between 1% and 5%)
- As an at least one citrate (for example sodium citrate);
- At least one salt (for example 30% or more).

Further possible ingredients include potassium peroxymonosulfate, N,N-Bis(Carboxylatomethyl) Alanine Trisodium Salt, Sodium Lauryl Sulfoacetate.

In an example, the cleansing agent may comprise one or more of sodium carbonate, sodium citrate, sodium carbonate peroxide, N,N-Bis(Carboxylatomethyl) Alanine Trisodium Salt, Sodium Lauryl Sulfoacetate.

Cleansing agents for beverage preparation machines, in particular coffee machines, in particular for coffee machines for portion capsules, are known in the art. For this reason, the composition is not discussed in any more detail here.

In embodiments, the capsule wall is a multilayer. At least one layer of the multilayer is water-soluble. At least one of the layers, which may be a water-soluble layer or an other, for example separate layer, may contain the cleansing agent.

Especially, the water-soluble polymer may constitute one or more of the outer layers of a multilayer, whereas the cleansing agent, or at least a portion thereof, may be contained in an inner layer.

The designation "outer layer" when relating to the layered structure of the multilayer in this text refers to the build of the multilayer structure itself. In the capsule, one of the outer layers will be oriented towards the capsule interior, whereas the other one of the outer layers will, relating to the capsule, form an exterior layer and constitute the capsule surface.

In addition to concerning a cleansing capsule, the present invention also concerns a beverage preparation system that comprises a beverage preparation capsule containing a beverage preparation substance, a beverage preparation machine, and a cleansing capsule as described in the present text. The beverage preparation machine is equipped to prepare a beverage from the beverage preparation substance and from hot water by injecting the hot water into the beverage preparation capsule. It comprises a brewing chamber shaped to receive the capsule. The cleansing capsule has a shape adapted to the shape of the brewing chamber so that the brewing chamber is capable of receiving the cleansing capsule instead of the beverage preparation capsule. Thereby, the beverage preparation machine is capable of bringing hot water in contact with the cleansing capsule received by the brewing chamber and of thereby dissolving at least a portion of the water-soluble polymer.

For injecting the liquid and/or for allowing the beverage to flow out of the beverage preparation capsule, the beverage preparation machine comprises at least one piercing device. In many embodiments, the beverage preparation machine will comprise at least one injection-side piercing device for piercing the capsule on one side - for example a bottom side or a top side (a cover side if the capsule comprises a main body and a cover closing off the capsule by being attached to the main body) - and at least one extraction-side piercing device for piercing the capsule on an other, often opposite side (for example a top side or a bottom side, respectively).

According to a first possibility, the injector of the beverage preparation machine, which together with an extraction device forms the brewing chamber, pierces the cleansing capsule when the same is in the brewing chamber and injects the hot water into the cleansing capsule.

According to a second possibility, the injector, while being equipped to pierce the beverage preparation capsule, does not pierce the cleansing capsule. Instead, the hot water is brought into contact with the cleansing capsule from its outside.

Hereinafter, features of embodiments of the present invention are described with reference to drawings. In the drawings, same number designate same or corresponding elements. The drawings are mostly schematical and show:
- Fig. 1: An example of a cleansing capsule;
- Fig. 2: a cleansing capsule filled by the cleansing agent;
- Fig. 3: a possible build of the capsule wall;
- Fig. 4: an alternative capsule wall;
- Fig. 5: an even further capsule wall;
- Fig. 6: a beverage preparation machine; and
- Fig. 7: a cleansing capsule having a different shape.

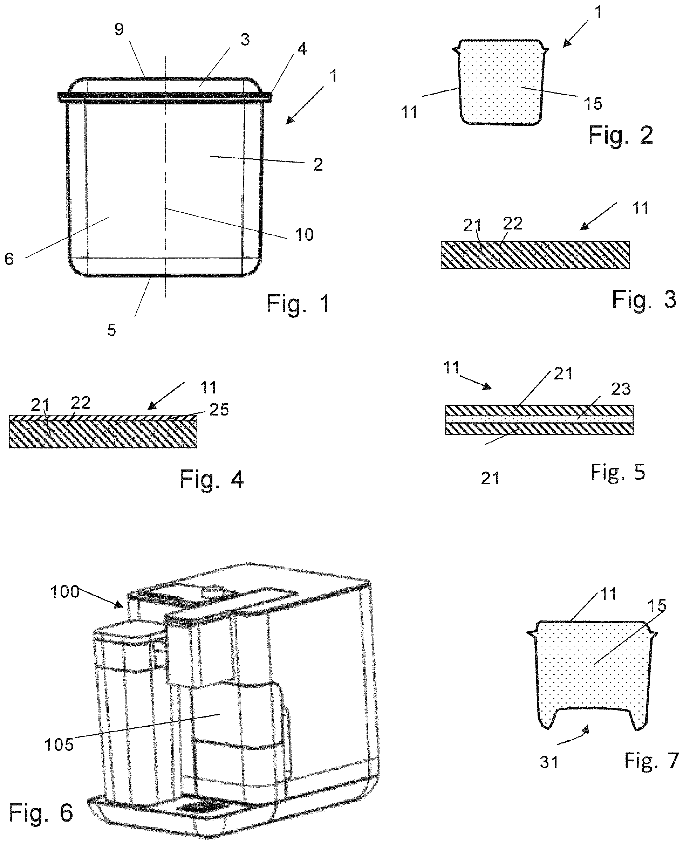

**Figure 1** illustrates an example of a cleansing capsule 1. The cleansing capsule 1 may have a shape identical to the shape of a beverage portion capsule belonging to a beverage preparation system the machine of which is to be cleansed by the cleansing capsule. The cleansing capsule according to Fig. 1 essentially has the shape of a cube with rounded edges, with an expanse slightly increasing towards the side lying at the top.

The cleansing capsule comprises a main body 2 and a cover 3 which is fastened thereon along a peripheral collar 4. The main body forms a capsule bottom 5 and a peripheral side wall 6 which, at its end which is at the outside with respect to the axial directions (axis 10) and which is at the top in the figure, is terminated by the collar 4. The cover is arched outwards, by way of the cover surface 9 which is essentially parallel to the capsule bottom 5 being offset outwards with respect to the peripheral collar 4.

The main body 2 and the cover 3 together constitute the capsule wall.

The cleansing capsule is configured to be pierced, for the cleansing process, for the purpose of injecting hot water into the cleansing capsule so that the hot water gets into contact with the cleansing agent and cleanses the brewing chamber of the machine.

**Figure 2** illustrates the possibility that a cleansing agent 15 is enclosed by the capsule wall. The cleansing agent thus constitutes a filling of the capsule, similar to the coffee powder (or other extraction material) contained in a similarly shaped portion capsule for brewing a drink. When the capsule is pierced and hot water is injected into the capsule, it dissolves the cleansing agent. The flow of the thus resulting cleaning liquid is similar to the flow of the brewed drink. In contrast to the prior art, however, the cleaning liquid will also dissolve the capsule wall, or a portion thereof (for example a layer thereof), itself by the latter comprising the water-soluble polymer.

**Figure 3** illustrates the possibility that in addition or as an alternative to being enclosed by the capsule wall, a cleansing agent 22 can be dissolved and/or dispersed in the water-soluble polymer 21 constituting the capsule wall.

**Figure 4** depicts a variant in which the capsule wall comprises, in addition to the water-soluble polymer 21 (with or without the cleansing agent 22 dissolved and/or dispersed in it), a for example thin layer 25 of a polymer that is not water-soluble but for example also is bio-degradable. This variant features the advantage that the capsule shape may remain essentially intact until the end of the cleansing process so that its liquid directing capability remains until the end.

A same effect may be achieved if the process of the capsule wall being dissolved in the water is slower than the cleansing process itself so that it is terminated only after the cleansing process, after the capsule is ejected from the brewing chamber.

**Figure 5** shows the possibility that a cleansing agent layer 23 is sandwiched between two polymer layers, for example two layers of the water-soluble polymer 21.

**Figure 6** illustrates a beverage preparation machine 100, namely a coffee machine, that contains a brewing module cooperating with the cleansing capsule. Underneath the brewing module, the coffee machine comprises a container 105 for used capsules. The brewing module is equipped for allowing the used capsules (beverage capsules and also what remains of the cleansing capsule after the cleansing process) to fall down into the container 105 when the brewing chamber is opened after the process.

As is known in the art, the brewing module of the beverage preparation module comprises injection-side piercing devices and may comprise extraction-side piercing devices for piercing the capsule for the process. Figure 7 very schematically illustrates the possibility that the shape of the cleansing capsule 1 can be adapted to comprise an indentation 31 so that the injection-side piercing devices do not pierce the cleansing capsule. Then, the hot water injected into the brewing chamber will get into contact with the capsule wall 11 from the outside, for example in the manner substantially as taught in WO 2015/144347.

Instead of the shown approximately cubic shape, the capsule may have any other suitable shape, such as circularly symmetrical about an axis (cup-shaped), etc.

## Claims

1. A cleansing capsule for a beverage preparation system, the cleansing capsule comprising a cleansing and/or descaling agent and comprising a capsule wall, **characterized in that** the capsule wall comprises a water-soluble polymer.

2. The cleansing capsule according to claim 1, wherein the cleansing and/or descaling agent is contained in the capsule by being enclosed by the capsule wall.

3. The cleansing capsule according to claim 1 or 2, wherein the cleansing and/or descaling agent is contained in the capsule wall.

4. The cleansing capsule according to claim 3, wherein the cleansing agent is dissolved and/or dispersed in the water-soluble polymer.

5. The cleansing capsule according to claim 3or 4, wherein the capsule wall comprises a multi-layer structure, and wherein cleansing agent is arranged in layer of the multi-layer structure that is different from a layer that comprises the water-soluble polymer.

6. The cleansing capsule according to any one of the previous claims, wherein the water-soluble polymer comprises a polymer chain with a plurality of vinyl alcohol groups.

7. The cleansing capsule according to claim 6 wherein the water-soluble polymer is poly(vinyl alcohol) (PVOH).

8. The cleansing capsule according to any one of the previous claims, consisting of bio-degradable materials.

9. The cleansing capsule according to any one of the previous claims, wherein the cleansing agent comprises at least one oxygen-based bleaching agent, at least one phosphate, at least one carbonate, and at least one salt.

10. A beverage preparation system, comprising a beverage preparation capsule containing a beverage preparation substance, a beverage preparation machine (100) equipped to prepare a beverage from the beverage preparation substance and from hot water by injecting the hot water into the beverage preparation capsule, the beverage preparation machine (100) comprising a brewing chamber shaped to receive the capsule (1), the system further comprising a cleansing capsule according to any one of the previous claims, wherein the cleansing capsule has a shape adapted to the shape of the brewing chamber so that the brewing chamber is capable of receiving the cleansing capsule instead of the beverage preparation capsule, whereby the beverage preparation machine is capable of bringing hot water in contact with the cleansing capsule received by the brewing chamber and of thereby dissolving at least a portion of the water-soluble polymer.

11. The beverage preparation system according to claim 10, wherein the beverage preparation machine comprises an injector for introducing the hot water into the beverage preparation capsule and a discharge device for discharging an extraction product from the beverage preparation capsule, wherein the injector and the discharge device together define the brewing chamber, wherein the injector has at least one injection-side piercing device, and wherein the cleansing capsule is shaped to be pierced by the injection-side piercing device when received in the brewing chamber.

12. The beverage preparation system according to claim 10, wherein the beverage preparation machine comprises an injector for introducing the hot water into the beverage preparation capsule and a discharge device for discharging an extraction product from the beverage preparation capsule, wherein the injector and the discharge device together define the brewing chamber, wherein the injector has at least one injection-side piercing device, and wherein the cleansing capsule is shaped to not be pierced by the injection-side piercing device when received in the brewing chamber.
